# NEUE EUROPÄISCHE PATENTSCHRIFT

(11) **EP 1 004 555 B2**
(45) Veröffentlichungstag und Bekanntmachung des Hinweises auf die Entscheidung über den Einspruch: **17.11.2004**
(45) Hinweis auf die Patenterteilung: 05.12.2001
(21) Anmeldenummer: 99117565.4
(22) Anmeldetag: 06.09.1999
(51) Int. Cl.: C04B 28/02, C04B 111/10

(54) **Schnellsterstarrende hydraulische Bindemittelzusammensetzung**
Fast setting hydraulic binder composition
Composition de liant hydraulique à prise rapide

(30) Priorität: 25.11.1998 DE 19854477
(43) Veröffentlichungstag der Anmeldung: 31.05.2000
(73) Patentinhaber: DYCKERHOFF AKTIENGESELLSCHAFT, D-65203 Wiesbaden (DE)
(72) Erfinder: Mitkova, Darina, Dr., 55276 Oppenheim (DE)
(74) Vertreter: Patentanwälte Dr. Solf & Zapf

(56) Entgegenhaltungen:
- EP-A- 0 612 702
- DE-A- 19 653 524
- DE-C2- 3 340 681
- DE-C2- 19 633 447
- US-A- 4 066 469
- CHEMICAL ABSTRACTS, vol. 119, no. 6, 9. August 1993 (1993-08-09) Columbus, Ohio, US; abstract no. 54757w, J. HRAZDIRA: Seite 350; XP000405072 & AM.CONCR. INS., SP, Bd. SP-132, 1993, Seiten 1637-1650,
- Klingelhöfer, P.; Kistenmacher, K. und Büchner, K.-H.: "Polycarboxylate als neue Verflüssigergeneration, ConChem-Journal, 5. Jahrgang, 4/97, S. 146-148
- Heinrich, W. und Bonder, W.: "Über Rohstoffe und Wirkungsweise von Betonverflüssigern, Beton und Stahlbetonbau H. 8/1983, S. 218 - 220

## Beschreibung

Schnellsterstarrende hydraulische Bindemittelzusammensetzungen, welche in der Literatur auch als "Löffelbinder" bezeichnet werden, sind Bindemittel oder Bindemittelzusammensetzungen, die schon während des Anrührens mit Wasser unter deutlich spürbarer Wärmeentwicklung erstarren. Diese Löffelbinder erhärten schon in wenigen Minuten oder gar Sekunden, so daß eine Verfestigung schon während des Anrührens des Mörtels eintritt, wobei ein nochmaliges Durchmischen des Mörtels, bzw. Betons nicht möglich ist.

Löffelbinder werden unter anderem aus nicht normgemäßen Zementen ausgebildet, welche lediglich durch die Mahlung von Klinker ohne die Zumahlung von Verzögerern wie Gips oder Anhydrit hergestellt werden. Wird Portlandzementklinker ohne jegliche Zusätze vermahlen, so erhält man besonders dann einen schnellbindenden Zement, wenn es sich um einen tonerdereichen Klinker handelt, da für das frühe Erstarren die sehr schnelle Hydratation der Calciumaluminate insbesondere des Tricalciumaluminats (C₃A) verantwortlich ist. Das sich durch Hydratation des Tricalciumsilikats (C₃S) rasch bildende Calciumhydroxid reagiert in derartigen sulfatträgerfreien Systemen mit dem C₃A und Wasser zu Calciumaluminathydraten, welche sehr schnell sehr große tafelige Kristalle ausbilden, die sich miteinander verzahnen und so das rasche Abbinden verursachen.

Darüberhinaus wurde herausgefunden (Kühl, H.: Der Baustoff Zement, VEB Verlag für Bauwesen, Berlin 1963), daß die Portlandzemente besonders dann zum Raschbinden neigen, wenn der Klinker nicht ganz scharf gebrannt war oder wenn er größere Mengen an Leichtbrand enthielt. Die Klinkerkörner, die hierbei entstehen, haben ein weniger dichtes Gefüge und besitzen dank ihrer Porosität eine größere Oberfläche. Auch die Geschwindigkeit des Abkühlens des Klinkers kann ein rasches Abbinden bewirken (Bogue, R.H.: The Chemistry of Portland Cement, Reinhold Publishing Corporation, New York 1955), auch diese, aus langsam abgekühlten Klinker hergestellten Zemente zeigen ein entsprechend rasches Abbinden, welches von einer spürbaren Wärmeentwicklung begleitet ist.

Es ist bekannt, zur Beeinflussung der Frischund Festeigenschaften von Betonen oder Mörteln Zusatzmittel, insbesondere organische Zusatzmittel den Zusammensetzungen zuzufügen. Einige dieser Zusatzmittel haben neben ihrer Hauptwirkung auch gewisse Nebenwirkungen. So zeigen Verflüssiger auf Ligninsulfonatbasis bisweilen auch eine verzögernde Wirkung in Zementzubereitungen. Dies führte dazu, daß diese Ligninsulfonate bzw. Verflüssiger auf Ligninsulfonatbasis auch als Substituenten für den in Normzementen enthaltenen Gips zur Regelung des Erstarrens von Portlandzementklinkermehlen getestet wurden. So ist es bekannt (Lukjanova, O.I; Segalova, E.E.; Rebinder, P. A.: The Effect of hydrophilic Plasticizers Additions on the Properties of concentrated cement Suspension, Kolloidnyj zhurnal XIX, No. 1, 1957) daß Bindemittelleime aus gemahlenem Portlandzementklinker, welche ohne Gips hergestellt werden bei Zugabe von Ligninsulfonat ausreichende Festigkeiten ergeben, wobei diese Leime aufgrund der verflüssigenden Wirkung des Ligninsulfonats mit sehr niedrigen Wasserzementwert hergestellt werden können. Erscheinungen, wie das falsche Erstarren werden nicht beobachtet. Die Ligninsulfonate bzw. Verflüssiger auf Ligninsulfonatbasis können teilweise oder vollkommen durch andere verflüssigend wirkende Zusatzmittel, wie z.B. Kondensationsprodukte sulfonierter Phenole und Formaldehyde oder Salze der Naphtalinsulfonsäuren ersetzt werden. Darüberhinaus ist es bekannt, daß Natriumligninsulfonate und Natriumcarbonat gemeinsam einen Einfluß auf die Hydratation von Portlandzementklinker haben (Odler, I., Duckstein, U.; Becker, Th.: On the Effect of Water solubles Lignosulfonates and Carbonates on Portland cement and Clinker Pastes, 1. Physical Properties, Cement and Concrete Research, Vol. 8, pp. 469-480, 1978). Der beobachtete Verflüssigungseffekt der Zusätze hängt offenbar mit deren Fähigkeit, die Klinkerpartikel in einer wässrigen Suspension effektiv zu dispergieren zusammen. Aus der DE 33 40 681 A1 ist es bekannt, gips- und anhydritfreien Zement als Spritzzement bzw. im Gemenge mit Zuschlagstoffen als Trockenspritzbeton zu verwenden, wobei dieser bekannte Zement Zusatzmittel wie Verflüssiger, z.B. sulfonierte Melamin-Formaldehydharze, Ligninsulfonat und Naphtalinsulfonat in Mengen von 0,1 bis 5 % bezogen auf das Gewicht des Zements enthalten kann. Diese Zusatzmittel sollen als wassereinsparende und damit verdichtungsfördernde Mittel wirken.

Aus der US-A-4,066,469 ist eine ultraschnell erhärtende Portlandzementmischung bekannt. Diese kann sowohl Gips enthalten als auch gipsfrei sein. Gemäß der US-A-4,066,469 kann diese Portlandzementmischung neben Gips auch Hydroxycarboxylsäuren oder Ligninsulfonate als Erstarrungsverzögerer enthalten, wobei diese Erstarrungsverzögerer vorzugsweise einen verflüssigenden Effekt haben sollen. Zur Einstellung der Erhärtungsgeschwindigkeit soll der Mahlgrad variiert werden oder die Verhältnisse der verwendeten Additive.

Zwar wird durch die Zugabe von sulfonathaltigen Zusatzmitteln zu den aus gipsfreien Portlandzementklinker hergestellten Bindemitteln die Verarbeitbarkeit verbessert, nachteilig ist jedoch der schlecht beherrschbare Übergang von der angemessenen Zugabemenge mit guter Verarbeitbarkeit zu nicht mehr beherrschbaren und daher nicht verarbeitbaren Systemen. Eine Überdosierung der sulfonathaltigen Zusatzmittel in diesen Systemen mit dem Ziel der Hydratationsverzögerung kann zu einem starken Abfall der Frühund Endfestigkeit führen. Der Festigkeitsverlust wird offenbar durch die irreversible Adsorption des Ligninsulfonats und der sulfonhaltigen Fließmittel (beispielsweise Melaminformaldehyd) am Tricalciumsilikat (C₃S) verursacht. Dieser Adsorbtionsprozeß blockiert die weitere Hydratation. Hierdurch kann das ordnungsgemäße Ansteifen und Erstarren eines Spritzzements gemäß der DE 33 40 681 A1 nicht mehr gewährleistet werden. Darüber hinaus kann die verflüssigende Wirkung auch bei Zugabe von größeren Mengen dieser Verflüssiger über einen bestimmten Bereich hinaus nicht gesteigert werden.

Darüber hinaus ist es bekannt (Klingelhöfer, P.; Kistenmacher, K. und Büchner, H.: Polycarboxylate als neue Verflüssigergeneration, ConChem-Jornal, 5. Jahrgang, 4/97, S. 146-148) bei Massenbetonen im Baubereich Polycarboxylate zu verwenden. Diese Verflüssiger werden auch als "Advanced Superplasticizers" bezeichnet. Ihre verflüssigende Wirkung liegt über der der Ligninsulfonate. Diese Polycarboxylate werden in größerem Umfang bisher in Japan eingesetzt, wo sie bereits 1987 eingeführt wurden. Diese Polycarboxylate erbringen höhere Verflüssigungsleistungen für hochfeste Zemente ohne eine Erstarrungsverzögerung. Das Wirkprinzip der Polycarboxylate beruht auf zwei Vorgängen, zum einen der elektrischen Abstoßung aufgrund der negativen Ladung der Polycarboxylate (enthalpischer Effekt) sowie der sterischen Abstoßung durch Haupt- und/oder Seitenketten (entropischer Effekt). Die Kombination dieser Vorgänge begründet die gute Dispergierwirkung der Polycarboxylate.

Um das Erstarrungsverhalten von Zementzubereitungen einzustellen, insbesondere um diese Zemente als Spritzzemente oder Spritzbetone verwenden zu können, ist es auch bekannt sehr geringe Sulfatträgermengen zugegeben. Hierbei ist jedoch nachteilig, daß diese Sulfatträger bezüglich der gewünschte Verzögerung schwierig zu dosieren sind. Mit diesen Sulfatträgem sind Verzögerungen bis maximal 1 Minute möglich. Hierbei ist nachteilig, daß es bei der Verwendung derartiger Bindemittel als Spritzbindemittel schon beim Auftragen des Spritzbindemittels derart zu Abbindereaktionen kommt, daß das aufgetragene Bindemittel keine nachhaltige Festigkeit mehr entwickeln kann und eine bröckelige Masse ausbildet.

Aufgabe der Erfindung ist es, eine schnellsterstarrende, hydraulische Bindemittelzusammensetzung zu schaffen, die eine verlängerte, steuerbare offene Verarbeitungszeit bei hoher Frühfestigkeit aufweist.

Die Aufgabe wird mit einer Bindemittelzusammensetzung mit den Merkmalen des Anspruch 1 gelöst, vorteilhafte Weiterbildungen sind in den Unteransprüchen gekennzeichnet.

Erfindungsgemäß weist die Bindemittelzusammensetzung zumindest eine sulfatträgerfreie Bindemittelkomponente sowie ein sulfonatgruppenfreies Fließmittel auf. Es wurde herausgefunden, daß merkwürdigerweise das sulfonatgruppenfreie Fließmittel, in Form von Polycarboxylaten, innerhalb einer kurzen Zeitspanne, beispielsweise 2 bis 10 Minuten auch verzögernd bezüglich der Früherstarrung der sulfatfreien Bindemittelkomponente wirkt. Dies wird darauf zurückgeführt, daß die Polycarboxylate offenbar kurzfristig unerwünschtes Kristallwachstum behindem.

Als Bindemittelkomponente können alle geeigneten, schnellsterstarrenden hydraulischen Bindemittel verwendet werden. Dies sind insbesondere Portlandzementklinkermehle, aber auch andere schnellsterstarrende hydraulische Bindemittel. Unter Portlandzementklinker wird das ofenfallende Gut verstanden. Portlandzementklinkermehl wird durch Mahlung des Portlandzementklinkers erzeugt, wobei, im Gegensatz zu Portlandzement kein Sulfatträger wie Gips oder Anhydrit beim oder vordem Mahlen zugesetzt und mit dem Klinker vermahlen wird. Insbesondere können auch Kombinationen aus Portlandzementklinkermehlen und/oder latenthydraulischen Stoffen wie Hüttensandmehlen und/oder puzzolanischen Stoffen, wie Traß, Mikrosilika, meta-Kaolinit, unbehandelte oder getemperte Zeolithe, und/oder inerte, feingemahlene Gesteinsmehle, wie Kalksteinmehl und/oder hydraulische Kalke und/oder Calciumsilikate und/oder Calciumaluminate oder jede Kombination aus diesen Bestandteilen verwendet werden, sofern das Bindemittel bzw. die Bindemittelzusammensetzung aus diesen Komponenten schnellsterhärtend ist. Die Feinheit der verwendeten Klinkermehle bzw. der verwendeten Bindemittelbestandteile reicht von normaler Zementfeinheit bis zu höchsten Feinheiten. Zur Regelung der Frühfestigkeit, des Erstarrungsverlaufs und der Endfestigkeit kann die Bindemittelkomponente auch aus Fraktionen unterschiedlicher Feinheit zusammengesetzt sein. Darüberhinaus können auch die aufgezählten Einzelbestandteile der Bindemittelkomponente je unterschiedliche Feinheiten aufweisen.

Als sulfonatgruppenfreies Fließmittel werden modifizierte Polycarboxylate, die beispielsweise in der DE 196 53 524 A1 beschrieben werden verwendet. Es handelt sich um carboxylgruppenhaltige Homo- oder Copolymere, deren Seitenketten modifiziert sind.

Zudem kann die schnellsterstarrende Bindemittelzusammensetzung Beschleuniger enthalten. Geeignete Beschleuniger sind beispielsweise Alkalicarbonate oder Alkalibicarbonte sowie Calciumnitrat, Alkalisilikate, Alkalihydroxide, Erdalkalihydroxide, Chloride mehrwertier Kationen (z.B. Calciumchlorid), Alkalipyrosulfite, Aminverbindungen sowie Calciumformiat und andere bekannte Beschleuniger sowie selbstverständlich Mischungen aus den genannten Beschleunigern.

Die Beschleuniger werden insbesondere eingesetzt, wenn wegen einer nötigen Verflüssigung bei niedrigem Wasserbindemittelwert viel Polycarboxylat zugesetzt wird. Mit den Beschleunigern kann die Verzögerung eingestellt werden, insbesondere, wenn diese über ein gewünschtes Maß hinausgeht.

Das Polycarboxylat wird insbesondere in Mengen von 0,25 bis 2 Masse-% bezogen auf das Bindemittel zugesetzt. Hierdurch können beispielsweise Verzögerungen von 2 bis 10 Minuten erzielt werden bei einer sehr guten Verflüssigung. Durch die starke Verflüssigungswirkung kann die Menge des zugesetzten Wassers und damit die Porosität des Bindemittelleims bzw. des erhärteten Bindemittelsteins herabgesetzt werden, wodurch die Festigkeit steigt.

Die Komponenten der schnellsterstarrenden hydraulischen Bindemittelzusammensetzung, also die Bindemittelkomponente, der oder die sulfatfreien Verflüssiger sowie ggfs. Beschleuniger und weitere bekannte Zusatzstoffe und/oder Zusatzmittel, wie Entschäumer oder Zuschlagstoffe können, sofern sie in trockenem Zustand vorliegen vorgemischt als Werktrockenmischung vorgehalten werden, welche am Verwendungsort lediglich noch mit Wasser angemischt werden muß. Dies kann beispielsweise mit den verschiedenen in der Spritzbetontechnologie bekannten Methoden und Technologien erfolgen. Liegt der Verflüssiger in flüssiger Form oder in wässriger Suspension vor, kann dieser zunächst im Anmachwasser dispergiert werden und anschließend die Bindemittelkomponente im Wasser gelöst werden. Eventuell notwendige weitere Zusatzmittel, insbesondere Beschleuniger können anschließend oder beim Verspritzen an der Mündung der Bindemittelmischung bzw. Bindemittelsuspension zugegeben werden. Um bestimmte gewünschte Festigkeitsbereiche und/oder Erstarrungs-/Zeitverläufe bzw. Festigkeitsentwicklungen zu erhalten kann die Bindemittelkomponente in ihrer Gesamtheit in verschiedenen Kornfeinheiten (Fraktionen) vorgehalten werden, welche dann schließlich zur zu verwendenden Mischung, abgestimmt auf die Anwendung, zusammengemischt werden. Ferner ist es möglich, die Einzelbestandteile der Bindemittelkomponente wie Portlandzementklinkermehl, Hüttensandfeinstmehl sowie weitere Bestandteile in jeweils gleicher oder unterschiedlicher Kornfeinheit miteinander zu vermischen. Hierbei wird beispielsweise durch eine höhere Kornfeinheit bzw. die Erhöhung des Feinstkornanteils die Hydratationsgeschwindigkeit und die Festigkeit erhöht, wobei durch den höheren Wasseranspruch bei gleicher Wassermenge der Fließmittelanteil erhöht wird. Durch die Fließmittelzugabe kann auch eine gewünschte Verzögerung eingestellt bzw. eine zu schnelle Hydratation wieder kompensiert werden. Ferner ist es möglich, die Reaktionszeit mit der gezielten Zugabe von Beschleunigern zu verändern.

Bei der erfindungsgemäßen schnellsterhärtenden Bindemittelzusammensetzung ist von Vorteil, daß gegenüber den bekannten Bindemittelzusammensetzungen eine verlängerte, steuerbare offene Verarbeitungszeit bei hoher Frühfestigkeit erzielt wird. Zudem ist die Verarbeitungszeit leichter und beherrschbarer einstellbar, da auf die Verwendung von Sulfatträgern zur Verzögerung des Bindemittelsystems verzichtet werden kann. Zudem kann die offene Verarbeitungszeit sehr feinfühlig durch die Verwendung des sulfonatgruppenfreien Fließmittels, ggfs. unterschiedlicher Bindemittelfeinheiten und ggfs. die Verwendung von an sich bekannten Beschleunigern eingestellt werden. Hierdurch wird eine Bindemittelzusammensetzung erzielt, die optimal auf die Verwendung, insbesondere als Spritzbindemittel abgestimmt werden kann und zudem nach dem Aufbringen eine sehr hohe Festigkeit entwickelt.

Die erfindungsgemäße schnellsterstarrende Bindemittelzusammensetzung findet Verwendung als Spritzbindemittel oder, unter Zugabe von Zuschlägen, zur Herstellung von Spritzbetonen sowie zur Herstellung von Mörteln, insbesondere Reparaturmörteln für Fahrbahnen, Rohrleitungen etc.

## Patentansprüche

1. Schnellsterstarrende hydraulische Bindemittelzusammensetzung, enthaltend eine sulfatträgerfreie Bindemittelkomponente und ein sulfonatgruppenfreies Fließmittel,
**dadurch gekennzeichnet, daß**
zur Steuerung der Verarbeitungszeit als Fließmittel Polycarboxylate in Form von carboxylgruppen haltigen Homo- oder Copolymeren, deren Seitenketten modifiziert sind, enthalten sind.

2. Bindemittel nach Anspruch 1,
**dadurch gekennzeichnet, daß**
die sulfatträgerfreie Bindemittelkomponente ein Portlandzementklinkermehl ist.

3. Bindemittel nach Anspruch 1,
**dadurch gekennzeichnet, daß**
die sulfatträgerfreie Bindemittelkomponente eine
Mischung aus Portlandzementklinkermehl und latenthydraulischen Stoffen wie Hüttensandmehl und/oder puzzolanischen Stoffen wie Traß, Mikrosilika, meta-Kaolinit, Zeolith und/oder inerten, feingemahlenen Gesteinsmehlen und/oder hydraulischen Stoffen wie Calciumsilikate und Calciumaluminate und/oder hydraulischen Kalken ist.

4. Bindemittel nach einem der vorhergehenden Ansprüche,
**dadurch gekennzeichnet, daß**
die Bindemittelkomponente der Bindemittelzusammensetzung normale Zementfeinheit aufweist.

5. Bindemittelzusammensetzung nach einem der Ansprüche 1 bis 3,
**dadurch gekennzeichnet, daß**
die Bindemittelkomponente der Bindemittelzusammensetzung feinstgemahlen ist.

6. Bindemittelzusammensetzung nach einem der Ansprüche 1 bis 5,
**dadurch gekennzeichnet, daß**
die Einzelbestandteile der Bindemittelkomponente verschiedene aufeinander abgestimmte Feinheiten aufweisen.

7. Bindemittelzusammensetzung nach einem der Ansprüche 1 bis 6,
**dadurch gekennzeichnet, daß**
die Bindemittelkomponente, abgestimmt auf eine gewünschte Frühfestigkeit und/oder Endfestigkeit und/oder Hydratationsgeschwindigkeit aus Fraktionen unterschiedlicher Feinheit zusammengesetzt ist.

8. Bindemittelzusammensetzung nach einem oder mehreren der vorhergehenden Ansprüche,
**dadurch gekennzeichnet, daß**
die Polycarboxylate homo- oder copolymere carboxylgruppenhaltige Monomere sind, deren Seitenketten modifiziert sind.

9. Bindemittelzusammensetzung nach Anspruch 8,
**dadurch gekennzeichnet, daß**
die Molmasse der Polycarboxylate zwischen 5.000 und 50.000 g/Mol liegt.

10. Bindemittelzusammensetzung nach einem der vorhergehenden Ansprüche,
**dadurch gekennzeichnet, daß**
das sulfonatgruppenfreie Fließmittel in Mengen von 0,25 bis 2 Masse-% bezogen auf die Bindemittelkomponente vorhanden ist.

11. Bindemittelzusammensetzung nach einem der vorhergehenden Ansprüche,
**dadurch gekennzeichnet, daß**
die Bindemittelzusammensetzung Erhärtungsbeschleuniger aufweist.

12. Bindemittelzusammensetzung nach Anspruch 11,
**dadurch gekennzeichnet, daß**
als Erhärtungsbeschleuniger Alkalicarbonat oder Alkalibicarbonat enthalten ist.

13. Bindemittelzusammensetzung nach Anspruch 11 und/oder 12,
**dadurch gekennzeichnet, daß**
als Erhärtungsbeschleuniger Alkalihydroxide enthalten sind.

14. Bindemittelzusammensetzung nach Anspruch 13,
**dadurch gekennzeichnet, daß**
als Beschleuniger Calciumnitrat und/oder Alkalisilikat und/oder Alkalihydroxide und/oder Erdalkalihydroxide und/oder Alkalicarbonate und/oder Alkalibicarbonate und/oder Chloride mehrwertiger Kationen und/oder Alkalipyrosulfite und/oder Aminverbindungen und/oder Calciumformiat enthalten sind.

15. Bindemittelzusammensetzung nach einem oder mehreren der vorhergehenden Ansprüche,
**dadurch gekennzeichnet, daß**
die Bindemittelzusammensetzung als Werktrokkenmischung vorgemischt vorliegt.

16. Verwendung einer Bindemittelzusammensetzung nach einem der Ansprüche 1 bis 15 als Spritzbindemittel.

17. Verwendung einer Bindemittelzusammensetzung nach einem oder mehreren der Ansprüche 1 bis 15 zur Herstellung eines Spritzbetons.

18. Verwendung einer Bindemittelzusammensetzung nach einem oder mehreren der Ansprüche 1 bis 15 zur Herstellung eines Reparaturmörtels.

## Claims

1. Quick-setting hydraulic binder composition comprising a sulphate-free binder component and a sulphonate-free fluidizer, **characterized in that** polycarboxylates in the form of carboxyl-containing homopolymers or copolymers whose side chains are modified are present as fluidizer to control the processing time.

2. Binder according to Claim 1, **characterized in that** the sulphate-free binder component is a ground Portland cement clinker.

3. Binder according to Claim 1, **characterized in that** the sulphate-free binder component is a mixture of ground Portland cement clinker and latent hydraulic materials such as ground slag sand and/or puzzolanic material such as trass, microsilica, meta-kaolinite, zeolite and/or inert, finely milled rock and/or hydraulic material such as calcium silicates and calcium aluminates and/or hydraulic limes.

4. Binder according to any of the preceding claims, **characterized in that** the binder component of the binder composition has normal cement fineness.

5. Binder composition according to any of Claims 1 to 3, **characterized in that** the binder component of the binder composition is very finely milled.

6. Binder composition according to any of Claims 1 to 5, **characterized in that** the individual constituents of the binder component have various finenesses matched to one another.

7. Binder composition according to any of Claims 1 to 6, **characterized in that** the binder component is composed of fractions having differing finenesses so as to match to a desired early strength and/or final strength and/or hydration rate.

8. Binder composition according to one or more of the preceding claims, **characterized in that** the polycarboxylates are homopolymers or copolymers of carboxyl-containing monomers whose side chains are modified.

9. Binder composition according to Claim 8, **characterized in that** the molar mass of the polycarboxylates is from 5000 to 50,000 g/mol.

10. Binder composition according to any of the preceding claims, **characterized in that** the sulphonate-free fluidizer is present in an amount of from 0.25 to 2% by mass based on the binder component.

11. Binder composition according to any of the preceding claims, **characterized in that** the binder composition comprises curing accelerators.

12. Binder composition according to Claim 11, **characterized in that** alkali metal carbonate or alkali metal bicarbonate is present as curing accelerator.

13. Binder composition according to Claim 11 and/or 12, **characterized in that** alkali metal hydroxides are present as curing accelerators.

14. Binder composition according to Claim 13, **characterized in that** calcium nitrate and/or alkali metal silicate and/or alkali metal hydroxides and/or alkaline earth metal hydroxides and/or alkali metal carbonates and/or alkali metal bicarbonates and/or chlorides of polyvalent cations and/or alkali metal pyrosulphites and/or amine compounds and/or calcium formate are present as accelerators.

15. Binder composition according to one or more of the preceding claims, **characterized in that** the binder composition is present in premixed form as a factory dry mix.

16. Use of a binder composition according to any of Claims 1 to 15 as spray binder.

17. Use of a binder composition according to one or more of Claims 1 to 15 for producing a spray concrete.

18. Use of a binder composition according to one or more of Claims 1 to 15 for producing a repair mortar.

## Revendications

1. Composition hydraulique de liant à solidification très rapide, contenant un composant liant exempt de support sulfaté et un fluidifiant exempt de groupements sulfonate, **caractérisée en ce que** des polycarboxylates sous forme d'homo- ou copolymères contenant des groupes carboxyles, dont les chaînes latérales sont modifiées sont contenus comme fluidifiant pour le réglage de la durée de transformation.

2. Liant selon la revendication 1, **caractérisé en ce que** le composant liant exempt de support sulfaté est une farine de clinker de ciment Portland.

3. Liant selon la revendication 1, **caractérisé en ce que** le composant liant exempt de support sulfaté est un mélange de farine de clinker de ciment Portland et de substances hydrauliques latentes telles qu'une farine de laitier granulé de haut-fourneau et/ou de substances pouzzolaniques, telles que du trass, de la microsilice, de la méta-kaolinite, de la zéolithe et/ou de farines de roche inertes, finement broyées et/ou de substances hydrauliques telles que des silicates de calcium et des aluminates de calcium et/ou de chaux hydrauliques.

4. Liant selon l'une quelconque des revendications précédentes, **caractérisé en ce que** le composant liant de la composition de liant présente la finesse normale de ciment.

5. Composition de liant selon l'une quelconque des revendications 1 à 3, **caractérisée en ce que** le composant liant de la composition de liant est broyé très finement.

6. Composition de liant selon l'une quelconque des revendications 1 à 5, **caractérisée en ce que** les différents constituants du composant liant présentent différentes finesses adaptées les unes aux autres.

7. Composition de liant selon l'une quelconque des revendications 1 à 6, **caractérisée en ce que** le composant liant, adapté à une résistance initiale souhaitée et/ou à une résistance finale souhaitée et/ou à une vitesse d'hydratation souhaitée, est constitué de fractions de différentes finesses.

8. Composition de liant selon l'une quelconque ou plusieurs des revendications précédentes, **caractérisée en ce que** les polycarboxylates sont des homopolymères ou des copolymères de monomères contenant des groupements carboxyle, dont les chaînes latérales sont modifiées.

9. Composition de liant selon la revendication 8, **caractérisée en ce que** la masse molaire des polycarboxylates est comprise entre 5000 et 50000 g/mole.

10. Composition de liant selon l'une quelconque des revendications précédentes, **caractérisée en ce que** le fluidifiant exempt de groupements sulfonate est présent en des quantités de 0,25 à 2% en masse par rapport au composant liant.

11. Composition de liant selon l'une quelconque des revendications précédentes, **caractérisée en ce que** la composition de liant présente des accélérateurs de durcissement.

12. Composition de liant selon la revendication 11, **caractérisée en ce que** du carbonate alcalin ou du bicarbonate alcalin est contenu comme accélérateur de durcissement.

13. Composition de liant selon les revendications 11 et/ou 12, **caractérisée en ce que** des hydroxydes alcalins sont contenus comme accélérateurs de durcissement.

14. Composition de liant selon la revendication 13, **caractérisée en ce que** du nitrate de calcium et/ou du silicate alcalin et/ou des hydroxydes alcalins et/ou des hydroxydes alcalino-terreux et/ou des carbonates alcalins et/ou des bicarbonates alcalins et/ou des chlorures de cations polyvalents et/ou des pyrosulfites alcalins et/ou des composés aminé et/ou du formiate de calcium sont contenus comme accélérateur.

15. Composition de liant selon l'une quelconque ou plusieurs des revendications précédentes, **caractérisée en ce que** la composition de liant se trouve sous forme prémélangée comme mélange sec d'usine.

16. Utilisation d'une composition de liant selon l'une quelconque des revendications 1 à 15 comme liant projeté.

17. Utilisation d'une composition de liant selon l'une quelconque ou plusieurs des revendications 1 à 15 pour la préparation d'un béton projeté.

18. Utilisation d'une composition de liant selon l'une quelconque ou plusieurs des revendications 1 à 15 pour la préparation d'un mortier de réparation.
